# EUROPÄISCHE PATENTSCHRIFT

(11) **EP 0 847 255 B1**
(45) Veröffentlichungstag und Bekanntmachung des Hinweises auf die Patenterteilung: **19.12.2001**
(21) Anmeldenummer: 96930119.1
(22) Anmeldetag: 29.08.1996
(51) Int. Cl.: A61C 8/00

(54) **ANKER FÜR IMPLANTATKÖRPER UND RICHTVORRICHTUNG ZU DEREN AUSRICHTUNG**
ANCHOR FOR DENTAL IMPLANTS, AND DEVICE FOR ALIGNMENT OF THE ANCHOR
ANCRE POUR IMPLANTS DENTAIRES ET DISPOSITIF PERMETTANT D'ALIGNER LADITE ANCRE

(30) Priorität: 01.09.1995 DE 29514042 U
(43) Veröffentlichungstag der Anmeldung: 17.06.1998
(60) Teilanmeldung: 00114473.2
(73) Patentinhaber: Unger, Heinz-Dieter, 49080 Osnabrück (DE)
(72) Erfinder: Unger, Heinz-Dieter, 49080 Osnabrück (DE)
(74) Vertreter: Busse & Busse Patentanwälte
(86) Internationale Anmeldenummer: EP9603784
(87) Internationale Veröffentlichungsnummer: WO9709004

(56) Entgegenhaltungen:
- EP-A- 0 288 702
- DE-A- 4 115 335
- DE-U- 9 202 656
- US-A- 5 073 110
- US-A- 5 302 125

## Beschreibung

Die Erfindung betrifft einen mit einem Implantatkörper verbindbaren Anker für prothetische Suprakonstruktionen in einer Ausbildung gemäß dem Oberbegriff des Anspruchs 1.

Zur Verankerung von Zahnprothesen finden Kugel-, Kronen- od.dgl. Ankerkopfteile Verwendung, die direkt in den an seiner Oberseite mit einer koaxialen Anschlußbohrung mit Innengewinde versehenen Implantatkörper eingeschraubt werden und eine zum Implantatkörper koaxiale Ausrichtung erhalten. Sofern die Implantatkörper für die Abstützung von Zahnprothesen aus kieferspezifischen Gründen keine untereinander achsparallele Ausrichtung erhalten können, müssen Kompensationsmaßnahmen getroffen und -mittel eingesetzt werden, um einen einwandfreien Sitz und/oder eine exakte Handhabung der Prothese beim Aufsetzen und Abnehmen zu gewährleisten.
Bei abnehmbaren Suprakonstruktionen ist ein mit dem Implantatkörper verbindbarer Anker mit einer Adaptervorrichtung bekannt (EP-A-288702), die einen in den Implantatkörper einschraubbaren Trägerteil und einen im Trägerteil ausrichtbar abgestützten und in ausgerichteter Stellung fixierbaren Anschlußteil für eine Verbindung mit einem Ankerkopfteil umfaßt. Der Trägerteil weist einen kugelteilförmigen Aufnahmeraum für den kugelig ausgebildeten Anschlußteil auf, und zur Fixierung ist eine Fixierschraube vorgesehen, die den Anschlußteil radial durchsetzt und im Trägerteil durch Klemmeingriff der Spitze der Fixierschraube an der gegenüberliegenden Wand des Aufnahmeraums festlegt. Bei einem anderen bekannten Anker (DE-U-92 02 656) wird ein kugeliges Anschlußteil in einem kugelteilförmigen Aufnahmeraum eines Trägerteils durch eine das Trägerteil außen übergreifende Verspannmutter ebenfalls durch Klemmung fixiert. Anstelle einer Klemmfixierung sieht eine bekannte Vorrichtung (US-A-5 073 110) auch eine Fixierung des Anschlußteils durch Verklebung mit dem Trägerteil in seiner jeweils ausgerichteten Position vor.

Die Erfindung befaßt sich mit dem Problem, die Kompensationsmaßnahmen und -mittel bei notwendigerweise divergierender Ausrichtung von Implantatkörpern im Kiefer zu vereinfachen und damit zu verkürzen und zu verbilligen. Die Erfindung löst das Problem durch einen Anker mit den Merkmalen des Anspruchs 1. Hinsichtlich wesentlicher weiterer Ausgestaltungen wird auf die Ansprüche 2 bis 4 verwiesen.

Die erfindungsgemäße, industriell vorfertigbare Adaptervorrichtung schafft eine überaus einfache Möglichkeit zur gewünschten Ausrichtung eines Ankerkopfteils unabhängig von der Ausrichtung eines Implantatkörper, die überaus schnell und dabei dauerhaft exakt vorgenommen werden kann wodurch sich die Beanspruchung des Patienten auf eine Sitzung reduziert.

Zahlreiche weitere Vorteile und Einzelheiten ergeben sich aus der nachfolgenden Beschreibung und der Zeichnung, in der ein Ausführungsbeispiel des Gegenstands der Erfindung näher veranschaulicht ist. In der Zeichnung zeigen:
- Fig. 1: eine Darstellung einer in einen Implantatkörper eingesetzten Adaptervorrichtung nach der Erfindung im Längsschnitt,
- Fig.2: eine Darstellung ähnlich Fig. 1 mit fixiertem Anschlußteil,
- Fig. 3: eine Einzeldarstellung des Implantatkörpers in einem Schnitt nach der Linie III-III in Fig. 4,
- Fig. 4: eine Draufsicht zu Fig. 3,
- Fig. 5: eine Darstellung der Adaptervorrichtung in einem Schnitt nach der Linie V-V in Fig. 6,
- Fig. 6: eine Draufsicht zu Fig. 5,
- Fig. 7: eine Darstellung eines mit der Adaptervorrichtung nach Fig. 5 verbindbaren Kugelkopfteils,
- Fig.8: eine Darstellung eines mit der Adaptervorrichtung nach Fig. 5 verbindbaren Kronenkopfteils,
- Fig. 9: eine abgebrochene Ansicht eines Bohrers zur Anbringung einer Fixierbohrung im Anschlußteil der Adaptervorrichtung,
- Fig. 10a und 10b: Ansichten von Fixierschrauben zur Fixierung des Anschlußteils im Trägerteil der Adaptervorrichtung, und
- Fig. 11: eine Darstellung der Richtvorrichtung nach der Erfindung.

Der in der Zeichnung dargestellte Anker für prothetische Suprakonstruktionen wie Zahnprothesen besteht im wesentlichen aus einer Adaptervorrichtung 1, die einen in einen Implantatkörper 2 mittels eines Außengewindezapfens 3 einschraubbaren Trägerteil 4 und einen im Trägerteil 4 ausrichtbar abgestützten Anschlußteil 5 umfaßt, und aus einem mit dem Anschlußteil 5 verbindbaren Ankerkopfteil für Zahnprothesen, der als Kugelkopfteil 6, oder Kronen- bzw. Konuskopfteil 7 bestehend aus Okklusionsschraube 8 und Konuskappe 9 ausgebildet sein oder irgendeine sonst geeignete Ausbildung haben kann. Der Ankerkopfteil 6,7 ist jeweils mittels eines Außengewindezapfens 10 bzw. 11 in den Anschlußteil 5 der Adaptervorrichtung 1 einschraubbar.

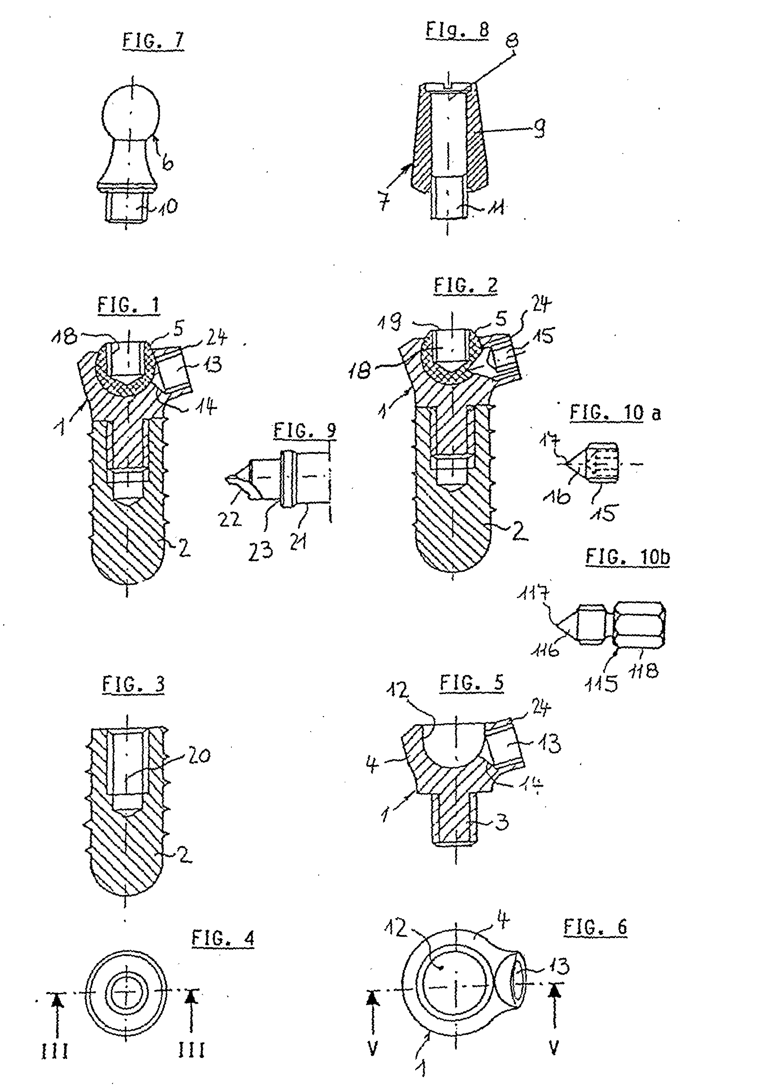

Der Trägerteil 4 weist einen kugelteilförmigen Aufnahmeraum 12 für den Anschlußteil 5 auf und umfaßt eine seitliche Senkbohrung 13 mit Innengewinde, die einen spitzkegeligen, sich bereichsweise mit der Wandung des Aufnahmeraumes 12 verschneidenden Boden 14 besitzt. Die gedachte Spitze des Bodens 14 der Senkbohrung 13 liegt dabei im kugelteilförmigen Aufnahmeraum 12, wie dies Fig. 2 erkennen läßt, die eine in die Senkbohrung 13 eingeschraubte Fixierschraube 15 wiedergibt, die einen spitzkegeligen, an den Boden 14 der Senkbohrung 13 bündig anlegbaren Endteil 16 aufweist, dessen Spitze 17 mit der gedachten Spitze des Bodens 14 der Senkbohrung 13 zusammenfällt. Statt einer Fixierschraube 15 in Inbusausführung kann alternativ auch eine Fixierschraube 115 mit einem Schlüsselansatz 118 zum Einsatz kommen, der an einer Sollbruchebene abbrechbar ist. Nach Überschleifen der Bruchfläche nimmt eine solche Fixierschraube 115 (Fig. 10b), die hinsichtlich Endteil 116 mit Spitze 117 der Inbusausführung 15 (Fig. 10a) entspricht, die Senkkbohrung vollständig ein.

Der Anschlußteil 5 weist eine kugelabschnittförmige Außengestalt auf und ist mit einer Anschlußbohrung 18 mit Innengewinde versehen, deren Achse senkrecht zur Abschnittsebene 19 verläuft. Der Anschlußteil 5 ist im Trägerteil 4 nach allen Richtungen hin begrenzt verlagerbar abgestützt und wird in gewünschter Ausrichtung seiner Achse zur Achse 20 des Implantatkörpers 2 durch die Fixierschraube 15 festgelegt. Der zu mehr als zur Hälfte im Trägerteil 4 aufgenommene Anschlußteil 5 kann in den Trägerteil 4 einrastend eingepreßt werden. Es besteht jedoch auch die Möglichkeit eines einwärts Umformens des oberen Randbereiches des Aufnahmeraums 12 nach Einbringen des Anschlußteils 5, um den Anschlußteil 5 im Trägerteil 4 zu fixieren.

Sobald der Anschlußteil 5 durch einen unten noch näher zu beschreibenden Ausrichtvorgang seine gewünschte Lage einnimmt, wird mit Hilfe eines Bohrers 21 mit spitzkegeligem Bohrkopf 22, der durch die Senkbohrung 13 eingeführt wird, der Anschlußteil 5 angebohrt und in diesem jener Teil des spitzkegeligen Bodens 14 der Senkbohrung 13 ausgebohrt, der sich mit der Wandung des Aufnahmeraums 12 verschneidet. Die Schulter 23 am Bohrer 21 sichert dabei die exakte Bohrtiefe, die erreicht ist, wenn die Schulter 23 an der Außenfläche 24 des Trägerteils 4 anliegt, welche die Senkbohrung 13 umgibt. Nach Entfernen des Bohrers 21 und Einschrauben der Fixierschraube 15 gelangt deren spitzkegeliges Ende 16 in Anlage mit dem Boden 14 der Senkbohrung 13 und der entsprechenden Ausbohrung im Anschlußteil 5 mit der Folge, daß dieses exakt in der ausgerichteten Position festgelegt ist.

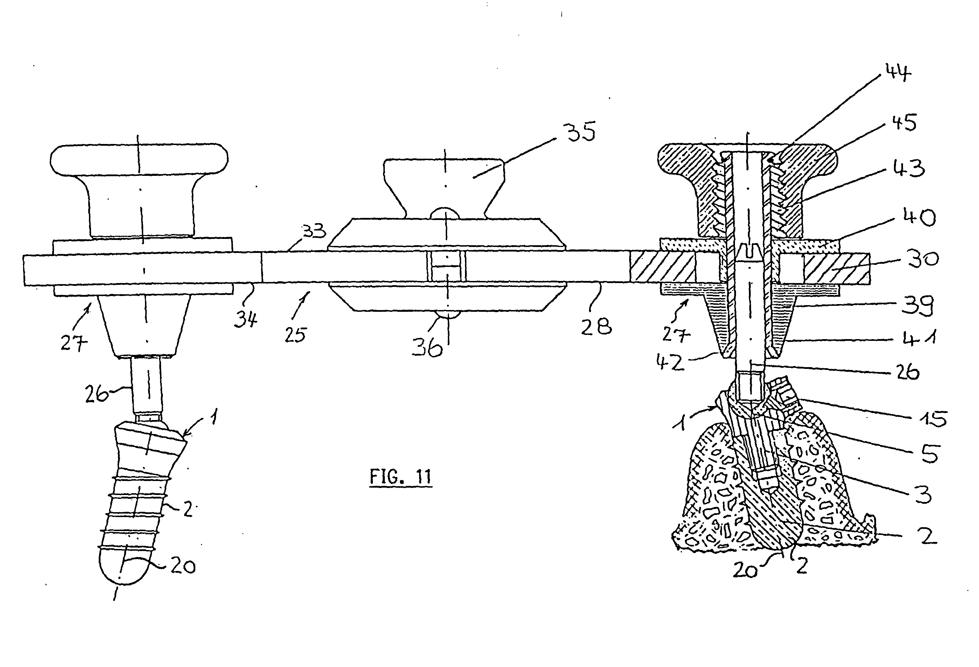

Zur Erleichterung des Richtvorganges findet die in Fig. 11 veranschaulichte erfindungsgemäße Richtvorrichtung 25 Anwendung, die in Fig. 11 im Einsatz bei zwei Adaptervorrichtungen 1 in Implantatkörpern 2 veranschaulicht ist, jedoch auch bei mehr als zwei zur gemeinsamen Abstützung einer Zahnprothese vorgesehenen Adaptervorrichtungen zum Einsatz kommen kann. Die Implantatkörper 2 sind mit untereinander im Raum divergierenden Achsen 20 veranschaulicht, bei denen direkt in die Implantatkörper 2 eingeschraubte Ankerkopfteile 6 oder 7 eine Ausrichtung einnehmen würden, bei der deren Achse mit der Achse 20 der Implantatkörper 2 zusammenfällt.

Um die für den Sitz und die Handhabung einer Zahnprothese optimale parallele Ausrichtung der gemeinsam eine Zahnprothese abstützenden Ankerkopfteile 6,7 zu erreichen, werden in die Anschlußbohrungen 18 der Anschlußteile 5 zunächst Richtstifte 26 (Fig. 14) eingeschraubt, und zwar zu einem Zeitpunkt, zu dem die Anschlußteile 5 in den Trägerteilen 4 der Adaptervorrichtung 1 noch keine Ausrichtung und Fixierung erfahren haben. Danach werden auf die Richtsstifte 26 je ein Richtglied 27 der Richtvorrichtung 25 aufgesetzt und die Richtglieder 27 an einer Richtschablone 28 der Richtvorrichtung 25 ausgerichtet und festgelegt, wodurch sämtliche Richtstifte 26 eine zueinander achsparallele Ausrichtung erhalten. Dabei werden die Richtstifte 26 in der Spannhülse fixiert, die im Bereich ihres unteren Endes durch den Spannvorgang zusammengedrückt wird. Danach werden mit dem Bohrer 21 die Anschlußteile 5 in den Adaptervorrichtungen 1 angebohrt und die Fixierschrauben 15 eingesetzt, wonach der Richtvorgang für die Anschlußteile 5 abgeschlossen ist. Alsdann wird die Richtvorrichtung 25 abgenommen, und nach Entfernen der Richtstifte 26 werden Ankerkopfteile 6 bzw. 7 in die Anschlußteile 5 eingeschraubt, wodurch nun Anker gebildet sind, deren Kopfteile exakt untereinander parallelachsig ausgerichtet sind.

## Patentansprüche

1. Mit einem Implantotkörper verbindbarer Anker für prothetische Suprakonstruktionen, mit einer Adaptervorrichtung (1), die einen in einen Impfantatkörper (2) einschraubbaren Trägerteil (4) und einen im Trägerteil (4) ausrichtbar abgestützten und in ausgerichteter Stellung durch eine Fixierschraube (15) fixierbaren kugeligen Anschlußteil (5) für eine Verbindung mit einem Ankerkopfteil (6;7) für Zahnprothesen umfaßt, wobei der Trägerteil (4) einen kugelteilförmigen Aufnahmeraum (12) für den Anschlußteil (5) aufweist, **dadurch gekennzeichnet, daß** der Trägerteil (4) für die Aufnahme der Fixierschraube (15) eine seitliche Senkbohrung (13) mit Innengewinde umfaßt, die einen spitzkegeligen, sich bereichsweise mit der Wandung des Aufnahmeraumes (12) verschneidenden Boden (14) aufweist.

2. Anker nach Anspruch 1, **dadurch gekennzeichnet, daß** die gedachte Spitze des Bodens (14) der Senkbohrung (13) im kugelteilförmigen Aufnahmeraum (12) liegt.

3. Anker nach Anspruch 1 oder 2, **dadurch gekennzeichnet, daß** die Fixierschraube (15) einen spitzkegeligen, an den Boden (14) der Senkbohrung (13) bündig anlegbaren Endteil (16) aufweist.

4. Anker nach einem der Ansprüche 1 bis 3, **dadurch gekennzeichnet, daß** der Anschlußteil (5) eine kugelabschnittförmige Außengestalt aufweist und mit einer Anschlußbohrung (18) mit Innengewinde versehen ist, deren Achse senkrecht zur Abschnittsebene (19) verläuft.

## Claims

1. Anchor that can be connected to an implant body for prosthetic supraconstructions, with an adapter device (1) which incorporates a support section (4) that can be screwed into an implant body (2) and a spherical connecting section (5) supported in the support section (4) so that it can be aligned, and capable of being fixed by a fixing screw (15) in the aligned position, for connection to an anchor head section (6;7) for dentures, in which the support section (4) exhibits a spherically shaped receiving compartment (12) for the connecting section (5), **characterised in that** the support section (4) for receiving the fixing screw (15) is provided with a lateral countersunk hole (13) with a female thread, which exhibits a bottom (14) with a pointed cone overlapping in certain areas the wall or the receiving compartment (12).

2. Anchor according to Claim 1, **characterised in that** the covered point of the bottom (14) of the countersunk hole (13) is located in the spherically shaped receiving compartment (12).

3. Anchor according to Claim 1 or 2, **characterised In that** the fixing screw (15) exhibits an end section (16) with a pointed cone that can be installed flush with the bottom (14) of the countersunk hole (13).

4. Anchor according to one of Claims 1 to 3, **characterised in that** the connecting section (5) exhibits an outer appearance in the shape of a spherical section, and is provided with a connection hole (18) with a female thread, the axis of which hole runs at right angles to the plane of section (19).

## Revendications

1. Ancre pouvant être raccordée à un implant, destinée à des supraconstructions prothétiques, présentant un dispositif adaptateur (1) qui comporte une pièce porteuse (4) pouvant être vissée dans un implant (2) et une pièce de raccordement sphérique (5) s'appuyant dans la pièce porteuse (4) de façon orientable et pouvant être fixée par une vis de fixation (15) en une position orientée, destinée à un assemblage avec une pièce de tête d'ancre (6;7) pour des prothèses dentaires, la pièce porteuse (4) présentant un espace récepteur (12) en forme de partie de sphère pour la pièce de raccordement (5), **caractérisée en ce que** la pièce porteuse (4) pour la réception de la vis de fixation (15) comprend un orifice incliné latéral (13) avec un filet intérieur, qui présente un fond à cône en pointe (14) formant dans une zone une entaille dans la paroi de l'espace récepteur (12).

2. Ancre selon la revendication 1, **caractérisée en ce que** la pointe pensée du fond (14) de l'orifice incliné (13) se trouve dans l'espace récepteur (12) en forme de partie de sphère.

3. Ancre selon la revendication 1 ou 2, **caractérisée en ce que** la vis de fixation (15) présente une partie d'extrémité (16) en forme de cône à pointe pouvant être appliquée à fleur contre le fond (14) de l'orifice incliné (13).

4. Ancre selon une des revendications 1 à 3, **caractérisée en ce que** la pièce de raccordement (5) présente une configuration extérieure en forme de tranche de sphère et est pourvue d'un orifice de raccordement (18) avec un filet intérieur, dont l'axe s'étend perpendiculairement par rapport au plan de la tranche (19).
